# EUROPÄISCHE PATENTANMELDUNG

(11) **EP 4 516 638 A1**
(43) Veröffentlichungstag der Anmeldung: **05.03.2025**
(21) Anmeldenummer: 24189506.9
(22) Anmeldetag: 18.07.2024
(51) Int. Cl.: B62D 6/00, B62D 15/02, B62D 5/04

(54) **VERFAHREN ZUM BETREIBEN EINES ELEKTROMECHANISCHEN LENKSYSTEMS UND ELEKTROMECHANISCHES LENKSYSTEM**

(30) Priorität: 04.09.2023 DE 102023208515
(71) Anmelder: VOLKSWAGEN AG, 38440 Wolfsburg (DE)
(72) Erfinder: Bartels, Alexander, 37445 Walkenried (DE); Sachwitz, Martin, 38118 Braunschweig (DE); Wiegmann, Andreas, 38106 Braunschweig (DE); Geveke, Fenja Victoria, 31275 Lehrte (DE)

(57) **Zusammenfassung**

Die Erfindung betrifft ein Verfahren zum Betreiben eines elektromechanischen Lenksystems (1), wobei eine Anregung durch die Fahrbahn mittels eines Vergleichs von einer erfassten und/oder bestimmten Zahnstangenbeschleunigung (a) einer Zahnstange (4) des Lenksystems (1) mit einem erfassten und/oder bestimmten Handmomentgradienten (Δtrq) eines Handmoments (trq) an einer Lenkhandhabe (11) detektiert wird. Ferner betrifft die Erfindung ein elektromechanisches Lenksystem (1), umfassend eine elektrische Maschine (2) und ein Lenkgetriebe (3), die eingerichtet sind zum Aufbringen einer Kraft (F) an einer Zahnstange (4) zum Lenken mindestens eines lenkbaren Rades (5), und einen Sensor (6) zum direkten oder indirekten Erfassen eines Zahnstangenzustands (7); ein Handmomentsensor (9) zum Erfassen eines Handmoments (trq) an einer Lenkhandhabe (11), und eine Steuereinrichtung (13), wobei die Steuereinrichtung (13) dazu eingerichtet ist, eine Anregung durch die Fahrbahn mittels eines Vergleichs von einer erfassten und/oder bestimmten Zahnstangenbeschleunigung (a) der Zahnstange (4) des Lenksystems (1) und eines erfassten und/oder bestimmten Handmomentgradienten (Δtrq) des Handmoments (trq) an der Lenkhandhabe (11) zu detektieren.

## Beschreibung

Die Erfindung betrifft ein Verfahren zum Betreiben eines elektromechanischen Lenksystems und ein elektromechanisches Lenksystem.

Bei elektromechanischen Lenksystemen ist die Rückmeldung der Fahrbahn an den Fahrer durch eine rein mechanische Kopplung sehr gering, da große Trägheiten im System aus elektrischer Maschine und Zahnstange die Rückmeldung ins Lenkrad stark dämpfen. Ein sogenannter Unterstützungskraft-Regler verwendet zur Rückmeldung einen Zahnstangenkraftschätzer. Ein solcher Unterstützungskraftregler kann bei neuartigen Achskonzepten jedoch nicht mehr ausreichend sein, um eine adäquate Fahrbahnrückmeldung bereitzustellen.

Der Erfindung liegt die Aufgabe zu Grunde, ein Verfahren zum Betreiben eines elektromechanischen Lenksystems und ein elektromechanisches Lenksystem zu schaffen, mit denen insbesondere eine Rückmeldung von der Fahrbahn an das Lenkrad verbessert werden kann.

Die Aufgabe wird erfindungsgemäß durch ein Verfahren mit den Merkmalen des Patentanspruchs 1 und ein elektromechanisches Lenksystem mit den Merkmalen des Patentanspruchs 10 gelöst. Vorteilhafte Ausgestaltungen der Erfindung ergeben sich aus den Unteransprüchen.

Insbesondere wird ein Verfahren zum Betreiben eines elektromechanischen Lenksystems zur Verfügung gestellt, wobei eine Anregung durch die Fahrbahn mittels eines Vergleichs von einer erfassten und/oder bestimmten Zahnstangenbeschleunigung einer Zahnstange des Lenksystems mit einem erfassten und/oder bestimmten Handmomentgradienten eines Handmoments an einer Lenkhandhabe detektiert wird.

Ferner wird insbesondere ein elektromechanisches Lenksystem geschaffen, umfassend:
eine elektrische Maschine und ein Lenkgetriebe, die eingerichtet sind zum Aufbringen einer Kraft an einer Zahnstange zum Lenken mindestens eines lenkbaren Rades, und einen Sensor zum direkten oder indirekten Erfassen eines Zahnstangenzustands;
ein Handmomentsensor zum Erfassen eines Handmoments an einer Lenkhandhabe, und eine Steuereinrichtung, wobei die Steuereinrichtung dazu eingerichtet ist, eine Anregung durch die Fahrbahn mittels eines Vergleichs von einer erfassten und/oder bestimmten Zahnstangenbeschleunigung der Zahnstange des Lenksystems und eines erfassten und/oder bestimmten Handmomentgradienten des Handmoments an der Lenkhandhabe zu detektieren.

Das Verfahren und das elektromechanische Lenksystem ermöglichen es, eine durch die Fahrbahn hervorgerufene Anregung des Lenksystems zu detektieren. Hierdurch kann verbessert auf eine solche Anregung reagiert werden. Insbesondere kann ausgehend von dieser Detektion eine gezielte Rückkopplung an das Lenkrad erfolgen, insbesondere ausgelöst werden. Eine der Grundideen ist hierbei, eine Anregung durch die Fahrbahn mittels eines Vergleichs von einer erfassten und/oder bestimmten Zahnstangenbeschleunigung einer Zahnstange des Lenksystems mit einem erfassten und/oder bestimmten Handmomentgradienten eines Handmoments an einer Lenkhandhabe zu detektieren. Der Gedanke dahinter ist, dass die Zahnstange des Lenksystems durch Fahrbahnanregungen beschleunigt wird. Hieraus resultiert insbesondere ein erfasster Handmomentgradient im Handmomentsensor des Lenksystems, welche aufgrund einer Trägheit an der Lenkhandhabe (Lenkrad) und einer Haltekraft des Fahrers ein entgegengesetztes Vorzeichen wie die Zahnstangenbeschleunigung hat. Dieses Verhalten kann genutzt werden zur Unterscheidung von Beschleunigungen, die von der Fahrbahn auf die Zahnstange aufgeprägt werden, zu Beschleunigungen, die der Fahrer durch aktives Lenken auf die Zahnstange aufprägt. Nach der Detektion kann insbesondere ein Detektionssignal erzeugt und bereitgestellt werden, um beispielsweise eine verstärkte Rückkopplung auszulösen.

Im Rahmen dieser Offenbarung wird davon ausgegangen, dass die Vorzeichen dann gleich sind, wenn eine Lenkbewegung des mindestens einen lenkbaren Rades der Lenkradbewegung der Lenkhandhabe (Lenkrad) entspricht. Die Vorzeichen sind hingegen insbesondere dann ungleich, wenn eine Lenkbewegung des mindestens einen lenkbaren Rades der Lenkradbewegung der Lenkhandhabe entgegengerichtet ist.

Teile des elektromechanischen Lenksystems, insbesondere die Steuereinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Die Steuereinrichtung kann auch als Teil eines Lenkmoduls und/oder eines Lenkradmoduls ausgebildet sein.

In einer Ausführungsform ist vorgesehen, dass in dem Fall, in dem unterschiedliche Vorzeichen detektiert werden, ein Zahnstangenweg ausgehend von der erfassten und/oder bestimmten Zahnstangenbeschleunigung und/oder dem erfassten und/oder bestimmten Handmomentgradienten geregelt wird. Hierdurch kann gezielt eine Rückkopplung an die Lenkhandhabe erzeugt werden, wenn eine Anregung durch die Fahrbahn detektiert worden ist. Insbesondere wird ausgehend von der detektierten Anregung eine Positionsdifferenz als Zahnstangenweg vorgegeben und mittels der Regelung umgesetzt.

In einer Ausführungsform ist vorgesehen, dass in dem Fall, in dem unterschiedliche Vorzeichen detektiert werden, eine auf die Zahnstange mittels eines Lenkgetriebes des Lenksystems aufgebrachte Kraft ausgehend von der erfassten und/oder bestimmten Zahnstangenbeschleunigung und/oder dem erfassten und/oder bestimmten Handmomentgradienten geregelt wird. Hierdurch kann alternativ oder zusätzlich eine Rückkopplung an die Lenkhandhabe erzeugt werden, wenn eine Anregung durch die Fahrbahn detektiert worden ist. Insbesondere wird ausgehend von der detektierten Anregung eine Kraft auf die Zahnstange vorgegeben und mittels der Regelung umgesetzt.

In einer Ausführungsform ist vorgesehen, dass der Zahnstangenweg und/oder die auf die Zahnstange aufgebrachte Kraft alternativ oder zusätzlich unter Berücksichtigung des Handmoments geregelt wird. Hierdurch kann die Rückkopplung am Lenkrad auf das Handmoment abgestimmt werden, um beispielsweise einen Komfort des Fahrers nicht zu beeinträchtigen. Beispielsweise kann vorgesehen sein, in Abhängigkeit von einer Größe des Handmoments die Rückkopplung in Form eines vorgegebenen Zahnstangenweges und/oder der auf die Zahnstange aufgebrachten Kraft zu vergrößern oder zu verringern.

In einer Ausführungsform ist vorgesehen, dass das Regeln des Zahnstangenweges und/oder der aufgebrachten Kraft unter Berücksichtigung einer Fahrzeuggeschwindigkeit erfolgt. Hierdurch kann eine situationsangepasste Rückmeldung an die Lenkhandhabe erfolgen. Beispielsweise kann vorgesehen sein, eine Geschwindigkeit, mit der die Regelung den Zahnstangenweg und/oder die aufgebrachte Kraft umsetzt, unter Berücksichtigung der Fahrzeuggeschwindigkeit zu verändern. Alternativ oder zusätzlich kann auch ein Sollwert für den Zahnstangenweg und/oder die aufgebrachte Kraft verändert werden.

In einer Ausführungsform ist vorgesehen, dass das Regeln des Zahnstangenweges und/oder der aufgebrachten Kraft unter Berücksichtigung einer Zahnstangengeschwindigkeit erfolgt. Hierdurch kann ein Zustand der Zahnstange beim Regeln verbessert berücksichtigt werden. Eine Rückkopplung kann hierdurch weiter verbessert werden.

In einer Ausführungsform ist vorgesehen, dass eine Verknüpfung zwischen eingangsseitig der erfassten und/oder bestimmten Zahnstangenbeschleunigung und ausgangsseitig dem Zahnstangenweg und/oder der aufgebrachten Kraft mittels mindestens einer hierfür vorgegebenen Kennlinie festgelegt wird. Hierdurch kann auf einfache Weise ein Verhalten festgelegt und insbesondere in weiteren Varianten in Abhängigkeit von weiteren Parametern angepasst werden. Die Kennlinie kann auch ein Kennfeld sein, bei dem mehrere Eingangsgrößen berücksichtigt werden, welche über einen Verlauf der Kennlinie (bzw. des Kennfeldes) mit einem Ausgangswert für den Zahnstangenweg oder der auf die Zahnstange aufgebrachten Kraft verknüpft sind.

In einer Ausführungsform ist vorgesehen, dass der Zahnstangenweg und/oder die auf die Zahnstange aufgebrachte Kraft unter Berücksichtigung eines vorgebbaren Verstärkungsfaktors geregelt wird. Hierdurch lässt sich eine Stärke der Rückkopplung an die Lenkhandhabe direkt einstellen und beeinflussen. Insbesondere kann vorgesehen sein, dass der vorgebbare Verstärkungsfaktor eine Größe des Zahnstangenweges und/oder der auf die Zahnstange aufgebrachten Kraft verändert, insbesondere vergrößert oder verringert und/oder dass der vorgebbare Verstärkungsfaktor eine Geschwindigkeit, mit der die Regelung den Zahnstangenweg und/oder die Kraft umsetzt, vergrößert oder verringert.

In einer Ausführungsform ist vorgesehen, dass zumindest während eines pilotierten Fahrens eine Richtung des Zahnstangenweges und/oder eine Richtung der aufgebrachten Kraft der Anregung durch die Fahrbahn entgegengerichtet ist. Hierdurch kann die Anregung durch die Fahrbahn teilweise oder vollständig kompensiert werden.

Weitere Merkmale zur Ausgestaltung des elektromechanischen Lenksystems ergeben sich aus der Beschreibung von Ausgestaltungen des Verfahrens. Die Vorteile des elektromechanischen Lenksystems sind hierbei jeweils die gleichen wie bei den Ausgestaltungen des Verfahrens.

Ferner wird auch ein Fahrzeug geschaffen, umfassend ein elektromechanisches Lenksystem nach einer der beschriebenen Ausführungsformen. Das Fahrzeug ist insbesondere ein Kraftfahrzeug.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des elektromechanischen Lenksystems;
- Fig. 2: ein schematisches Flussdiagramm zur Verdeutlichung eines Signalflusses und von Ausführungsformen des elektromechanischen Lenksystems;
- Fig. 3: ein schematisches Flussdiagramm zur Verdeutlichung eines Signalflusses und von weiteren Ausführungsformen des elektromechanischen Lenksystems.

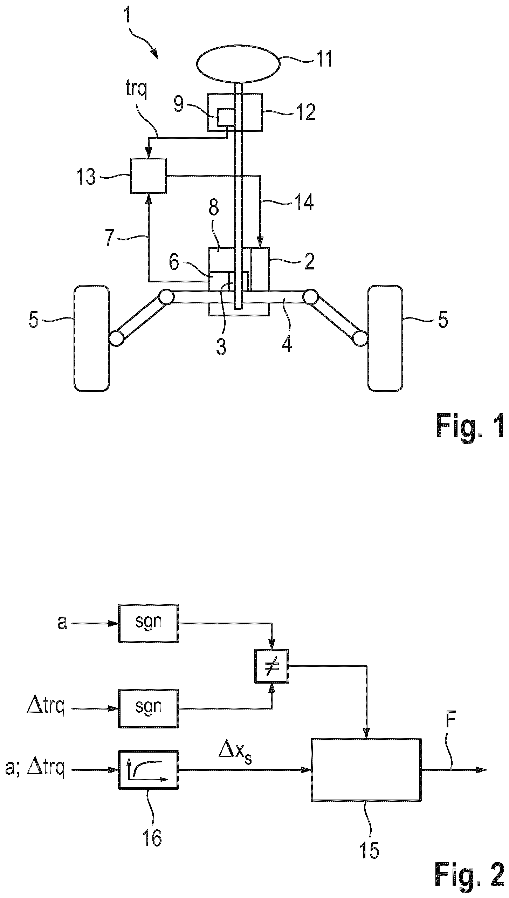

Fig. 1 zeigt eine schematische Darstellung einer Ausführungsform des elektromechanischen Lenksystems 1. Das elektromechanische Lenksystem 1 ist dazu eingerichtet, das in dieser Offenbarung beschriebene Verfahren auszuführen. Nachfolgend wird das in dieser Offenbarung beschriebene Verfahren anhand des elektromechanischen Lenksystems 1 näher beschrieben.

Das elektromechanische Lenksystem 1 umfasst eine elektrische Maschine 2 und ein Lenkgetriebe 3, die eingerichtet sind zum Aufbringen einer Kraft an einer Zahnstange 4 zum Lenken mindestens eines lenkbaren Rades 5, und einen Sensor 6 zum direkten oder indirekten Erfassen eines Zahnstangenzustands 7. Der Zahnstangenzustand 7 umfasst insbesondere eine Zahnstangenposition 7, die direkt oder indirekt erfasst werden kann, beispielsweise über das Lenkgetriebe 3 und eine Rotorlage der elektrischen Maschine 2. Die elektrische Maschine 2, das Lenkgetriebe 3 und der Sensor 6 können Teil eines Lenkmoduls 8 sein.

Ferner umfasst das elektromechanische Lenksystem 1 ein Handmomentsensor 9 (z.B. ein Torsionsstab) zum Erfassen eines Handmoments trq an einer Lenkhandhabe 11. Der Handmomentsensor 9 kann Teil eines Lenkradmoduls 12 sein.

Weiter umfasst das elektromechanische Lenksystem 1 eine Steuereinrichtung 13. Die Steuereinrichtung 13 ist dazu eingerichtet, eine Anregung durch die Fahrbahn mittels eines Vergleichs von einer erfassten und/oder bestimmten Zahnstangenbeschleunigung der Zahnstange 4 des Lenksystems 1 und eines erfassten und/oder bestimmten Handmomentgradienten des Handmoments trq an der Lenkhandhabe 11 zu detektieren. Die Zahnstangenbeschleunigung kann hierbei ausgehend von dem erfassten Zahnstangenzustand 7 bestimmt werden. Insbesondere kann die Zahnstangenbeschleunigung aus einer Änderung einer Zahnstangengeschwindigkeit abgeleitet werden, welche aus einer Änderung einer Zahnstangenposition berechnet werden kann. Die Berechnungen können mittels der Steuereinrichtung 13 durchgeführt werden. Es ist insbesondere vorgesehen, dass die Steuereinrichtung 13 ferner eine Lenkkraftunterstützung durch die elektrische Maschine 2 regelt und hierzu Steuersignale 14 an die elektrische Maschine 2 übermittelt.

Es kann vorgesehen sein, dass in dem Fall, in dem unterschiedliche Vorzeichen detektiert werden, ein Zahnstangenweg ausgehend von der erfassten und/oder bestimmten Zahnstangenbeschleunigung und/oder dem erfassten und/oder bestimmten Handmomentgradienten geregelt wird. Hierzu kann die Steuereinrichtung 13 eine Regelung entsprechend anpassen. Diese Ausführungsform ist schematisch in der Fig. 2 verdeutlicht, wobei die Fig. 2 zur Verdeutlichung einen Signalfluss zeigt. Von der Zahnstangenbeschleunigung a wird mittels der Signumfunktion sgn das Vorzeichen bestimmt, ebenso von einem Handmomentgradienten Δtrq. Sind die Vorzeichen unterschiedlich, so wird der Zahnstangenweg Δxₛ ausgehend von der erfassten und/oder bestimmten Zahnstangenbeschleunigung a und/oder dem erfassten und/oder bestimmten Handmomentgradienten Δtrq geregelt. Anders ausgedrückt wird die durch eine Fahrbahnanregung hervorgerufene Zahnstangenbeschleunigung a und/oder der entgegengerichtet hierzu wirkende erfasste und/oder bestimmte Handmomentgradient Δtrq dazu verwendet, einen Sollwert für den Zahnstangenweg Δxₛ zu bestimmen, beispielsweise anhand einer hierfür in der Steuereinrichtung 13 hinterlegten Kennlinie 16. Ausgehend von dem bestimmten Sollwert für den Zahnstangenweg Δxₛ regelt ein Regler 15 eine auf die Zahnstange 4 von der elektrischen Maschine 2 über das Lenkgetriebe 3 aufgebrachte Kraft F.

Es kann auch vorgesehen sein, dass in dem Fall, in dem unterschiedliche Vorzeichen detektiert werden, eine auf die Zahnstange 4 mittels eines Lenkgetriebes 3 des Lenksystems 1 aufgebrachte Kraft F ausgehend von der erfassten und/oder bestimmten Zahnstangenbeschleunigung a und/oder dem erfassten und/oder bestimmten Handmomentgradienten Δtrq geregelt wird. Entsprechend ist dann vorgesehen, dass ein Sollwert für die Kraft F ausgehend von der Zahnstangenbeschleunigung a und/oder dem erfassten und/oder bestimmten Handmomentgradienten Δtrq bestimmt und durch den Regler 15 geregelt wird. Das Bestimmen des Sollwertes kann beispielsweise mittels einer hierfür eingerichteten Kennlinie 16 erfolgen.

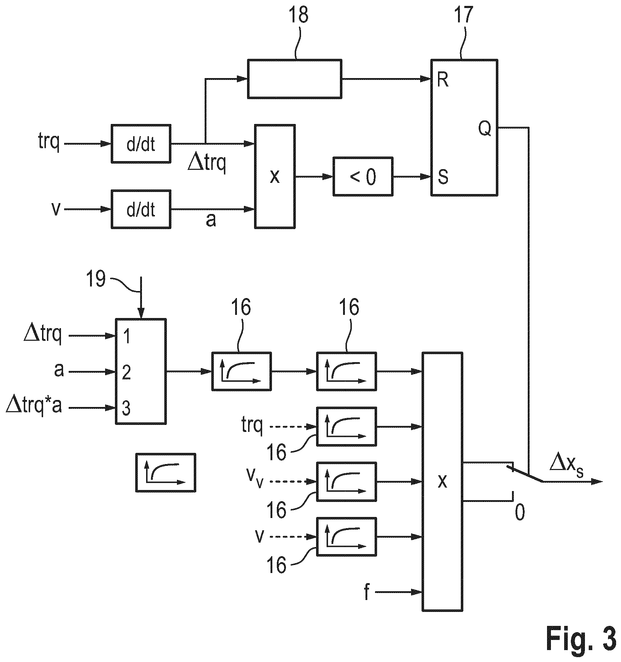

Die Fig. 3 zeigt eine schematische Darstellung zur Verdeutlichung weiterer Ausführungsformen des elektromechanischen Lenksystems, wobei wie bei der Fig. 2 ein Signalfluss gezeigt ist. Aus dem erfassten Handmoment trq wird durch zeitliche Ableitung ein Handmomentgradient Δtrq bestimmt. Aus einer Zahnstangengeschwindigkeit v wird durch zeitliche Ableitung die Zahnstangenbeschleunigung a bestimmt. Zum Vergleichen der Vorzeichen werden die resultierenden Werte beispielsweise miteinander multipliziert, um anschließend zu überprüfen, ob das Ergebnis kleiner als Null ist, was unterschiedlichen Vorzeichen entspricht. Ist dies der Fall, so wird eine Flipflop-Schaltung 17 gesetzt. Gleichzeitig wird in einer Box 18 überprüft, ob beim Handmomentgradienten Δtrq ein Vorzeichenwechsel stattgefunden hat. Ist dies der Fall, so wird die Flipflop-Schaltung 17 wieder zurückgesetzt.

Wurde ein unterschiedliches Vorzeichen detektiert, so ist der Ausgang der Flipflop-Schaltung 17 aktiv und der Zahnstangenweg Δxₛ und/oder die Kraft werden gesetzt und geregelt. Das Regeln kann hierbei ausgehend von der erfassten und/oder bestimmten Zahnstangenbeschleunigung a, dem erfassten und/oder bestimmten Handmomentgradienten Δtrq oder einer Kombination dieser Größen erfolgen. Es kann hierbei vorgesehen sein, dass ein Auswahlsignal 19 bereitgestellt und dazu verwendet wird, um eine der Größen oder eine Kombination hiervon auszuwählen (Alternativen 1, 2 oder 3). Das Auswahlsignal 19 kann beispielsweise ausgehend von einer Situation oder einem Kontext, in dem das Lenksystem verwendet wird, ausgewählt werden. Ausgehend von der oder den ausgewählten Größen wird dann mittels Kennlinien 16 der Zahnstangenweg Δxₛ oder die Kraft bestimmt und anschließend dem Regler (nicht gezeigt) als Sollwerte zugeführt.

Es kann vorgesehen sein, dass der Zahnstangenweg Δxₛ und/oder die auf die Zahnstange aufgebrachte Kraft alternativ oder zusätzlich unter Berücksichtigung des Handmoments trq geregelt wird.

Es kann vorgesehen sein, dass das Regeln des Zahnstangenweges Δxₛ und/oder der aufgebrachten Kraft unter Berücksichtigung einer Fahrzeuggeschwindigkeit vᵥ erfolgt.

Ferner kann vorgesehen sein, dass das Regeln des Zahnstangenweges Δxₛ und/oder der aufgebrachten Kraft unter Berücksichtigung der Zahnstangengeschwindigkeit v erfolgt.

Es kann vorgesehen sein, dass eine Verknüpfung zwischen eingangsseitig der erfassten und/oder bestimmten Zahnstangenbeschleunigung a und ausgangsseitig dem Zahnstangenweg Δxₛ und/oder der aufgebrachten Kraft mittels mindestens einer hierfür vorgegebenen Kennlinie 16 festgelegt wird, wie dies bereits beschrieben wurde.

Es kann vorgesehen sein, dass der Zahnstangenweg Δxₛ und/oder die auf die Zahnstange aufgebrachte Kraft unter Berücksichtigung eines vorgebbaren Verstärkungsfaktors f geregelt wird.

Es kann vorgesehen sein, dass zumindest während eines pilotierten Fahrens eine Richtung des Zahnstangenweges Δxₛ und/oder eine Richtung der aufgebrachten Kraft der Anregung durch die Fahrbahn entgegengerichtet ist. Hierzu kann beispielsweise ein Vorzeichen des Zahnstangenweges Δxₛ und/oder eine Richtung der aufgebrachten Kraft der Anregung geändert werden.

Mittels des in dieser Offenbarung beschriebenen Verfahrens und des elektromechanischen Lenksystems lässt sich eine deutlich verbesserte Fahrbahnrückmeldung an die Lenkhandhabe und somit den Fahrer erreichen, die gezielt und einfach auf verschiedene Fahrzeuge und Kundenbedürfnisse abgestimmt werden kann. Darüber hinaus werden nur geringe Ressourcen im Hinblick auf eine Rechenleistung und eine Speicherbelegung benötigt.

### Bezugszeichenliste

- 1: elektromechanisches Lenksystem
- 2: elektrische Maschine
- 3: Lenkgetriebe
- 4: Zahnstange
- 5: lenkbares Rad
- 6: Sensor
- 7: Zahnstangenzustand
- 8: Lenkmodul
- 9: Handmomentsensor
- 11: Lenkhandhabe
- 12: Lenkradmodul
- 13: Steuereinrichtung
- 14: Steuersignal
- 15: Regler
- 16: Kennlinie
- 17: Flipflop-Schaltung
- 18: Box (Prüfung Vorzeichenwechsel)
- 19: Auswahlsignal
- a: Zahnstangenbeschleunigung
- F: Kraft
- trq: Handmoment
- Δtrq: Handmomentgradient
- sgn: Signumfunktion
- Δxₛ: Zahnstangenweg
- v: Zahnstangengeschwindigkeit

## Patentansprüche

1. Verfahren zum Betreiben eines elektromechanischen Lenksystems (1),
wobei eine Anregung durch die Fahrbahn mittels eines Vergleichs von einer erfassten und/oder bestimmten Zahnstangenbeschleunigung (a) einer Zahnstange (4) des Lenksystems (1) mit einem erfassten und/oder bestimmten Handmomentgradienten (Δtrq) eines Handmoments (trq) an einer Lenkhandhabe (11) detektiert wird.

2. Verfahren nach Anspruch 1, **dadurch gekennzeichnet, dass** in dem Fall, in dem unterschiedliche Vorzeichen detektiert werden, ein Zahnstangenweg (Δxₛ) ausgehend von der erfassten und/oder bestimmten Zahnstangenbeschleunigung (a) und/oder dem erfassten und/oder bestimmten Handmomentgradienten (Δtrq) geregelt wird.

3. Verfahren nach Anspruch 1 oder 2, **dadurch gekennzeichnet, dass** in dem Fall, in dem unterschiedliche Vorzeichen detektiert werden, eine auf die Zahnstange (4) mittels eines Lenkgetriebes (3) des Lenksystems (1) aufgebrachte Kraft (F) ausgehend von der erfassten und/oder bestimmten Zahnstangenbeschleunigung (a) und/oder dem erfassten und/oder bestimmten Handmomentgradienten (Δtrq) geregelt wird.

4. Verfahren nach Anspruch 2 oder 3, **dadurch gekennzeichnet, dass** der Zahnstangenweg (Δxₛ) und/oder die auf die Zahnstange (4) aufgebrachte Kraft (F) alternativ oder zusätzlich unter Berücksichtigung des Handmoments (trq) geregelt wird.

5. Verfahren nach einem der Ansprüche 2 bis 4, **dadurch gekennzeichnet, dass** das Regeln des Zahnstangenweges (Δxₛ) und/oder der aufgebrachten Kraft (F) unter Berücksichtigung einer Fahrzeuggeschwindigkeit (vᵥ) erfolgt.

6. Verfahren nach einem der Ansprüche 2 bis 5, **dadurch gekennzeichnet, dass** das Regeln des Zahnstangenweges (Δxₛ) und/oder der aufgebrachten Kraft (F) unter Berücksichtigung einer Zahnstangengeschwindigkeit (v) erfolgt.

7. Verfahren nach einem der Ansprüche 2 bis 6, **dadurch gekennzeichnet, dass** eine Verknüpfung zwischen eingangsseitig der erfassten und/oder bestimmten Zahnstangenbeschleunigung (a) und ausgangsseitig dem Zahnstangenweg (Δxₛ) und/oder der aufgebrachten Kraft (F) mittels mindestens einer hierfür vorgegebenen Kennlinie (16) festgelegt wird.

8. Verfahren nach einem der Ansprüche 2 bis 7, **dadurch gekennzeichnet, dass** der Zahnstangenweg (Δxₛ) und/oder die auf die Zahnstange (4) aufgebrachte Kraft (F) unter Berücksichtigung eines vorgebbaren Verstärkungsfaktors (f) geregelt wird.

9. Verfahren nach einem der Ansprüche 2 bis 8, **dadurch gekennzeichnet, dass** zumindest während eines pilotierten Fahrens eine Richtung des Zahnstangenweges (Δxₛ) und/oder eine Richtung der aufgebrachten Kraft (F) der Anregung durch die Fahrbahn entgegengerichtet ist.

10. Elektromechanisches Lenksystem (1), umfassend:
eine elektrische Maschine (2) und ein Lenkgetriebe (3), die eingerichtet sind zum Aufbringen einer Kraft (F) an einer Zahnstange (4) zum Lenken mindestens eines lenkbaren Rades (5), und einen Sensor (6) zum direkten oder indirekten Erfassen eines Zahnstangenzustands (7);
ein Handmomentsensor (9) zum Erfassen eines Handmoments (trq) an einer Lenkhandhabe (11), und
eine Steuereinrichtung (13), wobei die Steuereinrichtung (13) dazu eingerichtet ist, eine Anregung durch die Fahrbahn mittels eines Vergleichs von einer erfassten und/oder bestimmten Zahnstangenbeschleunigung (a) der Zahnstange (4) des Lenksystems (1) und eines erfassten und/oder bestimmten Handmomentgradienten (Δtrq) des Handmoments (trq) an der Lenkhandhabe (11) zu detektieren.
